# EUROPÄISCHE PATENTSCHRIFT

(11) **EP 2 359 117 B1**
(45) Veröffentlichungstag und Bekanntmachung des Hinweises auf die Patenterteilung: **27.01.2016**
(21) Anmeldenummer: 09760823.6
(22) Anmeldetag: 20.11.2009
(51) Int. Cl.: G01L 19/08, G01F 23/18, G01L 13/00

(54) **MESSVORRICHTUNG ZUM BESTIMMEN EINES DIFFERENZDRUCKS**
ARRANGEMENT FOR MEASURING A DIFFERENTIAL PRESSURE
ARRANGEMENT POUR MESURER UNE PRESSION DIFFERENTEILLE

(30) Priorität: 18.12.2008 DE 102008054913
(43) Veröffentlichungstag der Anmeldung: 24.08.2011
(73) Patentinhaber: Endress+Hauser GmbH+Co. KG, 79689 Maulburg (DE)
(72) Erfinder: DIETERLE, Roland, 79539 Loerrach (DE); SPITZ, Andreas, 79650 Schopfheim (DE); SCHLACHTER, Marc, 79664 Wehr (DE)
(74) Vertreter: Andres, Angelika Maria
(86) Internationale Anmeldenummer: PCT/EP2009/065530
(87) Internationale Veröffentlichungsnummer: WO 2010/078993

(56) Entgegenhaltungen:
- US-A- 5 870 695
- US-A1- 2007 225 934

## Beschreibung

Die vorliegende Erfindung betrifft eine Messvorrichtung zum Ausgeben eines Messsignals, welches die Differenz zwischen einem ersten Druck eines Mediums an einem ersten Ort und dem zweiten Druck eines Mediums an einem zweiten Ort repräsentiert.

Diese Messvorrichtungen sind bis heute zumeist als Differenzdruckmessumformer realisiert, welche einen Differenzdruckmesswandler umfassen, der eine Differenzdruckmessmembran enthält die mit einem ersten Druck und einem zweiten Druck beaufschlagbar ist, wobei der erste Druck dem zweiten Druck entgegenwirkt, so dass die resultierende Verformung der Differenzdruckmessmembran eine Funktion der Differenz zwischen dem ersten Druck und dem zweiten Druck ist.

Die Zuleitung des ersten Drucks und des zweiten Drucks von abgesetzten Orten zum Differenzdruckmesswandler erfolgt gewöhnlich hydraulisch über ölgefüllte Kapillarleitungen. Aufgrund des damit verbundenen Installationsaufwands gibt es seit einiger Zeit Ansätze, den Differenzdruck zu bestimmen, indem der erste Druck und der zweite Druck jeweils mit einem Druckmesswandler erfasst werden und der Differenzdruck anhand der Signale des ersten und des zweiten Wandlers bestimmt wird.

Dieses Prinzip ist beispielsweise erläutert in "Hydrostatic Tank Gauging - technology whose time has come" (1990, ISA Services, Inc.).

Endress+Hauser hat beispielsweise 1992 eine modulare Messvorrichtung zur Füllstandsmessung angeboten und beschrieben, die zwei Druckmesswandler umfasst, deren PFM-Signale an eine Auswerteeinheit übertragen werden, wobei die Auswerteeinheit die PFM-Signale digitalisiert und anhand der digitalisierten PFM-Signale die Druckdifferenz berechnet "Liquid Level Transmitter Model DB40RL Sanitary Sensor deltapilot".

U.S. Patent Nr. 5,227,782 offenbart eine so genannte Hydraulic Interface Unit (HIU), zum durchführen einer bidirektionalen, digitalen Kommunikation mit mehreren Druckmessumformern, wobei die Kommunikationssignale dem Energieversorgungssignal überlagert sind.

U.S. Patent Nr. 5,870,695 offenbart eine weitere Differenzdruckmessanordnung mit abgesetzten Sensoreinheiten, deren Signale elektrisch übertragen werden.

Es ist einerseits eine Messanordnung mit einem abgesetzten Auswertemodul vorhanden, welches mit zwei Druckmesswandlermodulen jeweils über ein Kabel verbunden ist. Dies führt zu einem großen Verkabelungsaufwand, wenn das Auswertemodul in einem großen Abstand zu den Druckmesswandlermodulen positioniert ist. Darüber hinaus kann es aus Gründen der Störsicherheit erforderlich sein, dass beide Schnittstellen des Auswertemoduls zu den Druckmesswandlermodulen mit Entstörmaßnahmen ausgestattet werden, da es insbesondere bei leitungsgebundenen Störungen, zu Fehlfunktionen kommen kann. Ein Grund hierfür ist beispielsweise, dass ein typisches 4...20 mA Gerät einen Stromregel-OP besitzt, welcher den Strom über einen Shuntwiderstand regelt. Ist die Kapazität zwischen Gehäusepotential und Schaltungsmasse zu hoch fließt bei leitungsgekoppelten Störungen ein Fehlerstrom über diesen Shuntwiderstand. Dies wiederum hat zur Folge, dass die Stromregelung nicht mehr fehlerfrei funktioniert.

In anderen Messanordnungen ist ein so genannter Slave-Messumformer mit einem Master-Messumformer verbunden, wobei der Slave-Transmiter dem Master-Messumformer einen ersten Druckmesswert bereitstellt, der Master-Messumformer einen zweiten Druckmesswert selbst ermittelt und eine Auswerteeinheit enthält, um den Differenzdruck zu berechnen. Diese Lösung hat den Nachteil, dass der Master-Messumformer, der gewöhnlich Bedienelemente und Anschlussklemmen für eine Versorgungs- und Datenleitung vom bzw. zum Leitsystem enthält, an einer Prozessöffnung montiert sein muss, beispielsweise am Boden einer Tanks im so genannten Sumpf. Dieser Ort kann beispielsweise schwer zugänglich sein. Bei anderen Messstellen können dort für einen Bediener, bzw. für eine Recheneinheit ungünstige Bedingungen herrschen, seien es extreme Temperaturen, Medienemissionen, Kondensat, Vibrationen oder Lärm. Diese Lösung ist daher nicht für alle Messstellen geeignet.

Es ist daher die Aufgabe der vorliegenden Erfindung eine Messvorrichtung bereitzustellen, welche die Nachteile des Stands der Technik überwindet.

Die Aufgabe wird erfindungsgemäß gelöst durch die modulare Messvorrichtung gemäß dem unabhängigen Patentanspruch 1.

Die erfindungsgemäße modulare Messvorrichtung zum Ausgeben eines Messsignals, welches die Differenz zwischen einem ersten Druck eines Mediums an einem ersten Ort und dem zweiten Druck eines Mediums an einem zweiten Ort repräsentiert, umfasst
ein erstes Druckmesswandlermodul zum Erfassen des ersten Drucks und zum Erzeugen und Ausgeben einer Folge von ersten Signalen, die jeweils einen aktuellen Wert des ersten Drucks repräsentieren;
ein zweites Druckmesswandlermodul zum Erfassen des zweiten Drucks und zum Erzeugen einer Folge von zweiten Signalen die jeweils einen aktuellen Wert des zweiten Drucks repräsentieren;
ein Auswertemodul zum Ermitteln einer Folge von Differenzwerten zwischen dem ersten Druck und dem zweiten Druck und zum Ausgeben einer Folge von vierten Signalen, welche jeweils eine Differenz zwischen dem ersten Druck und dem zweiten Druck repräsentieren;
eine erste Kabelverbindung zwischen dem ersten Druckmesswandlermodul und dem zweiten Druckmesswandlermodul;
und eine zweite Kabelverbindung zwischen dem zweiten Druckmesswandlermodul und dem Auswertemodul;
wobei das erste Druckmesswandlermodul von dem zweiten Druckmesswandlermodul räumlich getrennt ist, und wobei das Auswertemodul von beiden Druckmesswandlermodulen räumlich getrennt ist;
wobei das zweite Druckmesswandlermodul eine Abbildungseinheit aufweist, welche dazu vorgesehen ist, die Folge von ersten Signalen und die Folge von zweiten Signalen zu empfangen und eine Folge von dritten Signalen zu erzeugen, welche jeweils eine Information über den ersten Druck und eine Information über den zweiten Druck basierend auf mindestens einem ersten Signal und mindestens einem zweiten Signal enthalten, und die Folge von dritte Signalen über die zweite Kabelverbindung an das Auswertemodul auszugeben.

In einer Weiterbildung der Erfindung können die ersten Signale Digitalsignale, und/oder die zweiten Signale Digitalsignale sein.

In einer Weiterbildung der Erfindung ist das Auswertemodul über eine dritte Kabelverbindung, insbesondere eine Zweidrahtleitung, an ein Leitsystem anschließbar, wobei das Messsignal über die dritte Kabelverbindung auszugeben ist, wobei die Messvorrichtung über die dritte Kabelverbindung mit Energie zu versorgen ist, wobei das zweite Druckmesswandlervorrichtung über die zweite Kabelverbindung mit Energie zu versorgen ist, und wobei das erste Druckmesswandlermodul über die erste Kabelverbindung mit Energie zu versorgen ist.

Die dritte Kabelverbindung kann insbesondere eine 4 bis 20 mA-Stromschleife umfassen.

Gemäß einer Weiterbildung werden die ersten Signale mit einer ersten Übertragungsrate, die zweiten Signale mit einer zweiten Übertragungsrate und die dritten Signale mit einer dritten Übertragungsrate übertragen, wobei die erste und oder die zweite Übertragungsrate sich von der dritten Übertragungsrate unterscheiden kann.

Die erste Übertragungsrate kann insbesondere größer sein als die dritte Übertragungsrate.

In einer Weiterbildung der Erfindung kann das dritte Signal die Information über den ersten Druck als Mittelwert von zwei oder mehr ersten Signalen enthalten.

In einer Weiterbildung der Erfindung kann das dritte Signal die Information über den zweiten Druck als Mittelwert von zwei oder mehr zweiten Signalen enthalten.

Das Auswertemodul und/oder das zweite Druckmesswandlermodul können gemäß einer Ausgestaltung der Erfindung jeweils eine galvanisch trennende Schnittstelle aufweisen.

Die galvanisch trennenden Schnittstellen können insbesondere induktiv koppelnde Schnittstellen sein.

Die Erfindung wird nun anhand eines in den Zeichnungen dargestellten Ausführungsbeispiels erläutert. Es zeigt:
- Fig. 1:: ein Blockdiagramm einer ersten Ausgestaltung einer erfindungsgemäßen Messvorrichtung; und
- Fig. 2:: eine Darstellung zur Datenübertragung zwischen den Modulen der Messvorrichtung.

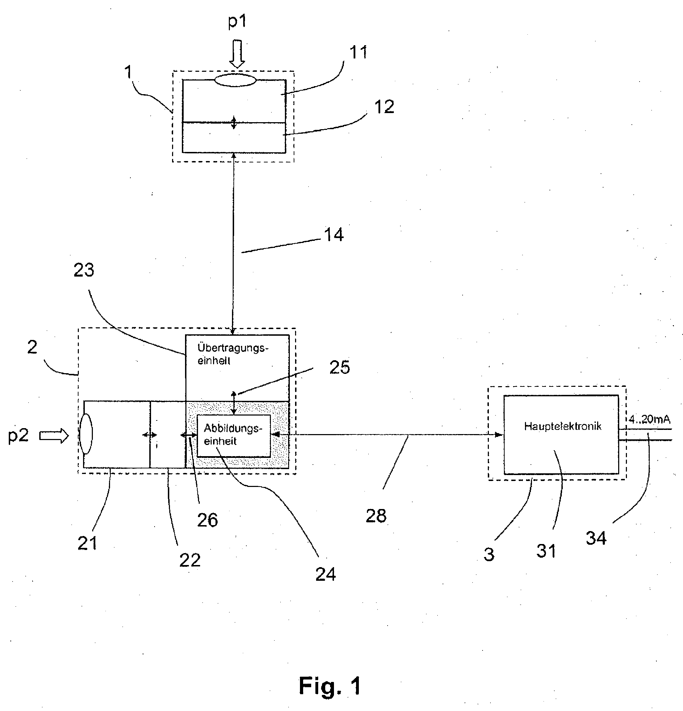

Die in Fig. 1 dargestellte Vorrichtung umfasst ein erstes Druckmesswandlermodul 1 und ein zweites Druckmesswandlermodul 2 sowie ein Auswertemodul 3.

Das erste Druckmesswandlermodul 1 enthält einen ersten Drucksensor 21, der mit einem ersten Mediendruck p1 beaufschlagbar ist, und der einen Wandler zum Ausgeben eines den ersten Mediendruck repräsentierenden ersten Primärsignals aufweist, wobei der Wandler beispielsweise ein kapazitiver oder (piezo-) resistiver Wandler sein kann. Weiterhin enthält das Druckmesswandlermodul einen ersten Temperatursensor, welcher eine Temperatur des ersten Drucksensors erfasst, und ein die Temperatur repräsentierendes Temperatursignal ausgibt. Das erste Druckmesswandlermodul enthält weiterhin eine erste Signalaufbereitungsschaltung 12, welche das Primärsignal des ersten Drucksensors und ggf. das Temperatursignal zunächst analog aufbereitet und anschließend beide Signale digitalisiert. Die Digitalsignale des ersten Drucks und der ersten Temperatur werden über eine erste externe Kabelverbindung 14 an eine Übertragungseinheit 23 des zweiten Druckmesswandlermoduls 2 übertragen.

Die erste externe Kabelverbindung 14 kann beispielsweise die folgenden Leitungen aufweisen:
- eine Gleichspannungsversorgung V+ zur Speisung des ersten Druckmesswandlermoduls,
- Masse,
- eine Taktsignalleitung, welche ein Taktsignal mit einer Taktfrequenz f1 von dem zweiten Sensormodul an das erste Sensormodul überträgt, und
- eine Datenleitung welche die Digitalsignale des ersten Drucks und der ersten Temperatur beispielsweise mit einer ersten Überragungsrate überträgt.

Sofern dies aufgrund von EMV-Anforderungen nötig ist, kann zur Taktsignalleitung und zur Datenleitung jeweils noch eine Leitung vorgesehen sein die das entsprechende Signal mit umgekehrten Vorzeichen überträgt.

Von der Übertragungseinheit werden die Digitalsignale des ersten Drucks und der ersten Temperatur werden über eine erste interne Verbindung 25 an eine Abbildungseinheit (Mapping Unit) 24 im zweiten Druckmesswandlermodul 2 übertragen.

Das zweite Druckmesswandlermodul 2 enthält neben der bereits erwähnten Übertragungseinheit 23 und der Abbildungseinheit 24 einen zweiten Drucksensor 21, der mit einem zweiten Mediendruck p2 beaufschlagbar ist, und der einen Wandler 22 zum Ausgeben eines den ersten Mediendruck repräsentierenden zweiten Primärsignals aufweist, wobei der Wandler beispielsweise ein kapazitiver oder (piezo-) resistiver Wandler sein kann. Weiterhin enthält das Druckmesswandlermodul einen zweiten Temperatursensor, welcher eine Temperatur des zweiten Drucksensors 21erfasst, und ein die Temperatur repräsentierendes zweites Temperatursignal ausgibt. Das zweite Druckmesswandlermodul enthält weiterhin eine zweite Signalaufbereitungsschaltung 22, welche das zweite Primärsignal des zweiten Drucksensors und ggf. das zweite Temperatursignal zunächst analog aufbereitet und anschließend beide Signale digitalisiert. Die Digitalsignale des zweiten Drucks und der zweiten Temperatur werden von der zweiten Signalaufbereitungsschaltun über eine zweite interne Kabelverbindung 26 an die Abbildungseinheit 24 übertragen.

Bei den ersten und zweiten internen Kabelverbindungen 25, 26 kann aufgrund der Kurzen Übertragungsstrecke jedenfalls auf die symmetrisierenden gegenphasigen Leitungen des Taktsignals und des Datensignals verzichtet werden. Hier sind neben der Energieversorgung jeweils nur eine Datenleitung mit der ersten Übertragungsrate und eine Taktleitung mit der Taktfrequenz f1 vorgesehen.

Die Abbildungseinheit 24 enthält einen nicht dargestellten Mikrokontroller welcher einerseits das Taktsignal zum ersten Druckmesswandlermodul 1 bereitstellt und andererseits die eingehenden Digitalsignale des ersten Drucks und der ersten Temperatur sowie des zweiten Drucks und der zweiten Temperatur erfasst und Signale, welche Informationen über den ersten Druck und den zweiten Druck sowie die erste und die zweite Temperatur enthalten, zur Übertragung an das Auswertemodul 3 ausgibt. Die Übertragung zum Auswertemodul erfolgt über eine zweite externe Kabelverbindung 28, welche beispielsweise die folgenden Leitungen umfasst:
- eine Gleichspannungsversorgung V+ zur Speisung des zweiten Druckmesswandlermoduls,
- Masse,
- eine Taktsignalleitung, welche ein Taktsignal mit der Frequenz von f1 von dem Auswertemodul an das zweite Sensormodul überträgt, und
- eine Datenleitung welche die Signale von der Abbildungseinheit 24 mit der einfachen ersten Übertragungsrate oder mit der halbierten ersten Übertragungsrate an das Auswertemodul überträgt.

Das Auswertemodul 3 enthält die Hauptelektronik mit einem Mikrokontroller zur Berechnung der Differenz zwischen dem ersten Mediendruck und dem zweiten Mediendruck sowie eine Versorgungsschaltung zum Anschluss an eine Zweidrahtschleife, auf welche die errechnete Druckdifferenz als 4 ... 20 mA-Stromsignal ausgegeben wird.

Weiterhin kann der Mikrokontroller vor der Differenzbildung die empfangenenen Druckmesswerte für den ersten Druck und den zweiten Druck in Abhängigkeit von den zugehörigen Temperaturmesswerten mit einem Kompensationsalgorithmus korrigieren.

Die Versorgungsschaltung stellt die Versorgungsspannungen für die Hauptelektronik und für die angeschlossenen Module bereit. Weiterhin enthält die Hauptelektronik ein HART-Modem, um dem Stromsignal ggf. Digitalsignale aufzumodulieren, welche einen oder mehrere der folgenden Messwerte repräsentieren: den ersten Druck, den zweiten Druck, den Differenzdruck, die erste Temperatur und die zweite Temperatur. Weiterhin können dem Auswertemodul über das HART-Modem Steuerkommandos übertragen werden.

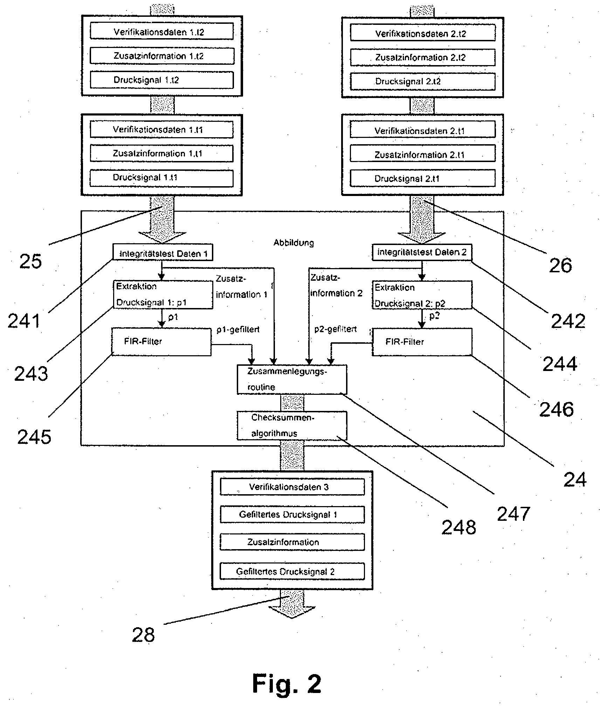

In Fig. 2 ist die Verarbeitung der eingehenden Signale durch die Abbildungseinheit 24 dargestellt. Die Abbildungseinheit 24 empfängt über die internen Verbindungen 25 und 26 jeweils einen Datenstrom mit Datensätzen bzw. Frames, welche jeweils ein Drucksignal, ein Temperatursignal, das als "additional information" gekennzeichnet ist, und Verifikationsdaten enthalten. Die Datensätze werden zunächst einem Integritätstest 241, 242 unterzogen, dann werden die Temperatursignale und die Drucksignale separiert, die Drucksignale 243, 244 werden jeweils einem FIR-Filter 245, 246 zugeführt der im Ergebnis eine Mittelung über zwei Messwerte durchführt. Die Druckmittelwerte und die Temperaturmesswerte werden mittels eines so genannten "Merger" bzw. einer Zusammenfegungsroutine 247 und einem nachfolgenden Kontrollsummenalgorithmus in einen Ausgabedatensatz gepackt, welcher Verifikationsdaten, ein gefiltertes erstes Drucksignal, die Temperatursignale und ein gefiltertes zweites Drucksignal enthält. Dieser Datensatz wird über die zweite externe Kabelverbindung 28 an das Auswertemodul ausgegeben.

Das erste Druckmesswandlermodul 1 kann ggf. von dem Auswertemodul 2 galvanisch getrennt sein. Dazu kann entweder zwischen dem Auswertemodul und dem zweiten Druckmesswandlermodul und/oder zwischen dem zweiten Druckmesswandlermodul und dem ersten Druckmesswandlermodul eine galvanische Trennung vorgesehen sein.

## Patentansprüche

1. Modulare Messvorrichtung zum Ausgeben eines Messsignals, welches die Differenz zwischen einem ersten Druck eines Mediums an einem ersten Ort und einem zweiten Druck eines Mediums an einem zweiten Ort repräsentiert, umfassend:
ein erstes Druckmesswandlermodul (1) zum Erfassen des ersten Drucks und zum Erzeugen und Ausgeben einer Folge von ersten Signalen, die jeweils einen aktuellen Wert des ersten Drucks repräsentieren;
ein zweites Druckmesswandlermodul (2) zum Erfassen des zweiten Drucks und zum Erzeugen einer Folge von zweiten Signalen die jeweils einen aktuellen Wert des zweiten Drucks repräsentieren;
ein Auswertemodul (3) zum Ermitteln einer Folge von Differenzwerten zwischen dem ersten Druck und dem zweiten Druck und zum Ausgeben einer Folge von vierten Signalen, welche jeweils eine Differenz zwischen dem ersten Druck und dem zweiten Druck repräsentieren;
eine erste Kabelverbindung (14) zwischen dem ersten Druckmesswandlermodul und dem zweiten Druckmesswandlermodul;
und eine zweite Kabelverbindung (28) zwischen dem zweiten Druckmesswandlermodul und dem Auswertemodull
wobei das erste Druckmesswandlermodul (1) von dem zweiten Druckmesswandlermodul räumlich getrennt ist, und wobei das Auswertemodul (3) von beiden Druckmesswandlermodulen räumlich getrennt ist;
wobei das zweite Druckmesswandlermodul (2) eine Abbildungseinheit (24) aufweist, welche dazu vorgesehen ist, die Folge von ersten Signalen und die Folge von zweiten Signalen zu empfangen und eine Folge von dritten Signalen, welche jeweils eine Information über den ersten Druck und eine Information über den zweiten Druck basierend auf mindestens einem ersten Signal und mindestens einem zweiten Signal enthalten zu erzeugen, und die Folge von dritte Signalen über die zweite (28) Kabelverbindung an das Auswertemodul (3) auszugeben.

2. Vorrichtung nach Anspruch 1, wobei das erste Signal ein digitales Signal ist, und/oder das zweite Signal ein digitales Signal ist.

3. Vorrichtung nach Anspruch 1 oder 2,
wobei das Auswertemodul über eine dritte Kabelverbindung, insbesondere eine Zweidrahtleitung, an ein Leitsystem anschließbar ist,
wobei das Messsignal über die dritte Kabelverbindung auszugeben ist,
wobei die Messvorrichtung über die dritte Kabelverbindung mit Energie zu versorgen ist,
wobei das zweite Druckmesswandlervorrichtung über die zweite Kabelverbindung mit Energie zu versorgen ist, und
wobei das erste Druckmesswandlermodul über die erste Kabelverbindung mit Energie zu versorgen ist.

4. Vorrichtung nach einem der vorhergehenden Ansprüche, die dazu ausgelegt ist, die ersten Signale mit einer ersten Übertragungsrate, die zweiten Signale mit einer zweiten Übertragungsrate und die dritten Signale mit einer dritten Übertragungsrate zu übertragen, wobei die erste und oder die zweite Übertragungsrate sich von der dritten Übertragungsrate unterscheidet.

5. Vorrichtung nach Anspruch 4, wobei die erste Übertragungsrate größer ist als die dritte Übertragungsrate.

6. Vorrichtung nach einem der vorhergehenden Ansprüche, wobei das dritte Signal die Informationen über den ersten Druck als Mittelwert von zwei oder mehr ersten Signalen enthält.

7. Vorrichtung nach einem der vorhergehenden Ansprüche, wobei das dritte Signal die Informationen über den zweiten Druck als Mittelwert von zwei oder mehr zweiten Signalen enthält.

8. Vorrichtung nach einem der vorhergehenden Ansprüche, wobei das Auswertemodul und/oder das erste Druckmesswandlermodul und/oder das zweite Druckmesswandlermodul eine galvanisch trennende Schnittstelle aufweisen.

## Claims

1. Modular measuring apparatus for outputting a measuring signal which represents the difference between a first pressure of a medium at a first location and a second pressure of a medium at a second location, comprising:
a first pressure transducer module (1) designed to record the first pressure and to generate and output a series of first signals, each representing a current value of the first pressure;
a second pressure transducer module (2) designed to record the second pressure and to generate a series of second signals, each representing a current value of the second pressure;
an evaluation module (3) designed to determine a series of difference values between the first pressure and the second pressure and to output a series of fourth signals, each representing a difference between the first pressure and the second pressure;
a first cable connection (14) between the first pressure transducer module and the second pressure transducer module;
and a second cable connection (28) between the second pressure transducer module and the evaluation module,
wherein the first pressure transducer module (1) is physically separated from the second pressure transducer module, and wherein the evaluation module (3) is physically separated from the two pressure transducer modules;
wherein the second pressure transducer module (2) has a mapping unit (24), which is designed to receive the series of first signals and the series of second signals and to generate a series of third signals which each contain information about the first pressure and information about the second pressure based on at least a first signal and at least a second signal, and to transmit the series of third signals to the evaluation module (3) via the second cable connection (28).

2. Apparatus as claimed in Claim 1, wherein the first signal is a digital signal and/or the second signal is a digital signal.

3. Apparatus as claimed in Claim 1 or 2,
wherein the evaluation module can be connected to a control system via a third cable connection, particularly a two-wire line,
wherein the measuring signal can be output via the third cable connection,
wherein energy can be supplied to the measuring apparatus via the third cable connection,
wherein energy can be supplied to the second pressure transducer unit via the second cable connection, and
wherein energy can be supplied to the first pressure transducer module via the first cable connection.

4. Apparatus as claimed in one of the previous claims which is designed to transmit the first signals at a first transmission rate, the second signals at a second transmission rate and the third signals at a third transmission rate, wherein the first and/or the second transmission rate is different from the third transmission rate.

5. Apparatus as claimed in Claim 4, wherein the first transmission rate is larger than the third transmission rate.

6. Apparatus as claimed in one of the previous claims, wherein the third signal contains the information about the first pressure as the average of two or more first signals.

7. Apparatus as claimed in one of the previous claims, wherein the third signal contains the information about the second pressure as the average of two or more second signals.

8. Apparatus as claimed in one of the previous claims, wherein the evaluation module and/or the first pressure transducer module and/or the second pressure transducer module have a galvanically isolating interface.

## Revendications

1. Dispositif de mesure modulaire destiné à la transmission d'un signal de mesure, qui représente la différence entre une première pression d'un produit en un premier emplacement et une deuxième pression d'un produit en un deuxième emplacement, comprenant
un premier module transducteur de pression (1) destiné à la mesure de la première pression et à la génération et la transmission d'une séquence de premiers signaux, qui représentent chacun une valeur actuelle de la première pression ;
un deuxième module transducteur de pression (1) destiné à la mesure de la deuxième pression et à la génération d'une séquence de deuxièmes signaux, qui représentent chacun une valeur actuelle de la deuxième pression ;
un module d'exploitation (3) destiné à déterminer une séquence de valeurs différentielles entre la première pression et la deuxième pression, et à la transmission d'une séquence de quatrièmes signaux, qui représentent chacun une différence entre la première pression et la deuxième pression ;
une première connexion par câble (14) entre le premier module transducteur de pression et le deuxième module transducteur de pression ;
et une deuxième connexion par câble (28) entre le deuxième module transducteur de pression et le module d'exploitation,
le premier module transducteur de pression (1) étant séparé dans l'espace par rapport au deuxième module transducteur de pression (2), et le module d'exploitation (3) étant séparé dans l'espace par rapport aux deux modules précédents ;
le deuxième module transducteur de pression (2) comportant une unité de traitement (24), laquelle est prévue pour recevoir la séquence de premiers signaux et la séquence de deuxièmes signaux, et pour générer une séquence de troisièmes signaux, qui contiennent chacun une information sur la première pression et une information sur la deuxième pression basées sur au moins un premier signal et au moins un deuxième signal, et pour transmettre la séquence de troisièmes signaux au module d'exploitation (3) par l'intermédiaire de la deuxième connexion (28).

2. Dispositif selon la revendication 1, pour lequel le premier signal est un signal numérique et/ou le deuxième signal est un signal numérique.

3. Dispositif selon la revendication 1 ou 2,
pour lequel le module d'exploitation peut être raccordé à un système numérique de contrôle commande par l'intermédiaire d'une troisième connexion par câble, notamment un câble bifilaire,
pour lequel le signal de mesure peut être transmis par l'intermédiaire de la troisième connexion par câble,
pour lequel le dispositif de mesure peut être alimenté par l'intermédiaire de la troisième connexion par câble,
pour lequel le deuxième dispositif transducteur de pression peut être alimenté en énergie par l'intermédiaire de la deuxième connexion par câble, et
pour lequel le premier module transducteur de pression peut être alimenté en énergie par l'intermédiaire de la première connexion par câble.

4. Dispositif selon l'une des revendications précédentes, lequel dispositif est conçu de telle sorte à transmettre les premiers signaux à une première vitesse de transmission, les deuxièmes signaux à une deuxième vitesse de transmission et les troisièmes signaux à une troisième vitesse de transmission, la première et/ou la deuxième vitesse de transmission étant distinctes de la troisième vitesse de transmission.

5. Dispositif selon la revendication 4, pour lequel la première vitesse de transmission est supérieure à la troisième vitesse de transmission.

6. Dispositif selon l'une des revendications précédentes, pour lequel le troisième signal contient les informations sur la première pression en tant que valeur moyenne de deux ou de plus parmi les premiers signaux.

7. Dispositif selon l'une des revendications précédentes, pour lequel le troisième signal contient les informations sur la deuxième pression en tant que valeur moyenne de deux ou de plus parmi les deuxièmes signaux.

8. Dispositif selon l'une des revendications précédentes, pour lequel le module d'exploitation et/ou le premier module transducteur de pression et/ou le deuxième module transducteur de pression présentent une interface à séparation galvanique.
